# EUROPEAN PATENT APPLICATION

(11) **EP 1 990 902 A1**
(43) Date of publication of application: **12.11.2008**
(21) Application number: 07742364.8
(22) Date of filing: 25.04.2007
(51) Int. Cl.: H02M 3/155

(54) **BIDIRECTIONAL DC-DC CONVERTER**

(30) Priority: 27.04.2006 JP 2006123210
(71) Applicant: MATSUSHITA ELECTRIC INDUSTRIAL CO., LTD., Osaka 571-8501 (JP)
(72) Inventor: MATSUO, Mitsuhiro, c/o Matsushita Electr. Ind. Co., Chuo-ku, Osaka-shi, Osaka 540-6207 (JP); YOSHIDA, Koji, c/o Matsushita Electr. Ind. Co., Chuo-ku, Osaka-shi, Osaka 540-6207 (JP); HANDA, Hiroyuki, c/o Matsushita Electr. Ind. Co., Chuo-ku, Osaka-shi, Osaka 540-6207 (JP)
(74) Representative: Schwabe - Sandmair - Marx
(86) International application number: PCT/JP2007/058929
(87) International publication number: WO 2007/125949

(57) **Abstract**

The object of the present invention is to provide a bi-directional DC-DC converter having a simplified circuit configuration. Each output of high voltage detection circuit (12) and low voltage detection circuit (15) is inputted to high-voltage side error amplifier circuit (50) and low-voltage side error amplifier circuit (51) independently disposed, which are configured so as to be inverse in polarity, and the output of high-voltage side error amplifier circuit (50) or the output of low-voltage side error amplifier circuit (51) is selected by converting direction switching circuit (22), and the output is inputted to control circuit (25) from PWM comparison circuit (21) being in common with respect to voltage step-up and decreasing operations, thereby driving the first switching element (5) and the second switching element (10). Thus, a inverting circuit conventionally used is not needed, and in addition, only one 3-terminal switch usually complicated in structure is used, and it possible to realize a bi-directional DC-DC converter having a simple configuration as a whole.

## Description

### TECHNICAL FIELD

The present invention relates to a bi-directional DC-DC converter capable of power conversion in both directions.

### BACKGROUND ART

A DC-DC converter is an apparatus for converting a certain DC voltage to a different DC voltage, which is widely employed in various fields. The operation of a DC-DC converter includes a voltage step-down operation for converting a certain DC voltage to a lower DC voltage, and a voltage step-up operation for converting a certain DC voltage to a higher DC voltage. A bi-directional DC-DC converter which performs voltage step-down operation or voltage step-up operation for charging in both directions between two kinds of battery elements being different in voltage is also developed.

Such a bi-directional DC-DC converter can be realized just by using a pair of DC-DC converters for performing voltage step-down operation and voltage step-up operation, but it results in doubling the circuit configuration, causing it to become complicated. Therefore, shown in Patent Document 1 is a bi-directional DC-DC converter which uses a single circuit configuration common to voltage step-down operation and voltage step-up operation and operates a switch with respect to component parts having different circuit configurations during voltage step-down operation and voltage step-up operation.

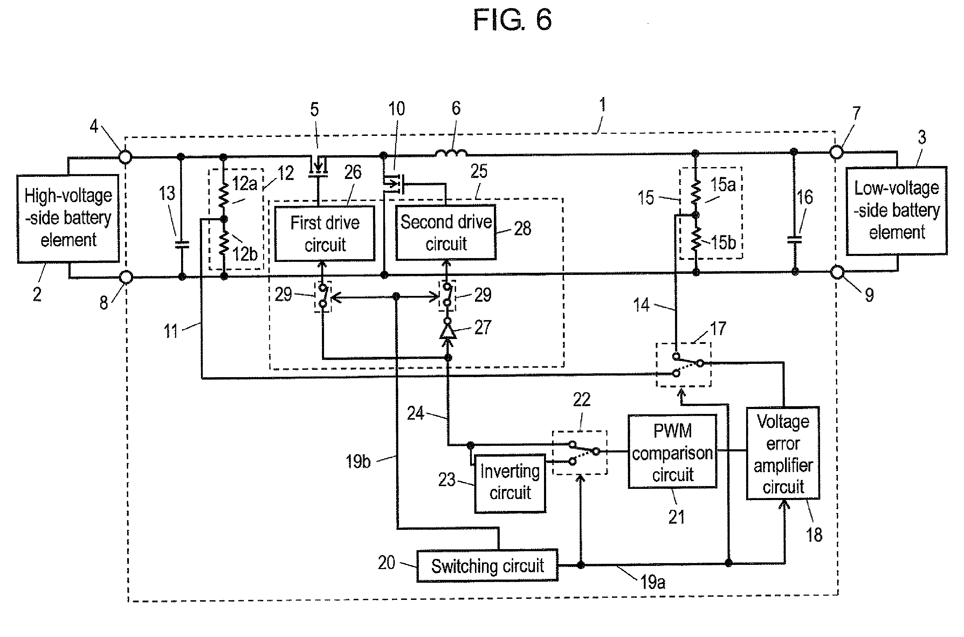

Fig. 6 is a block circuit diagram of such a conventional bi-directional DC-DC converter. Patent Document 1 shows an example capable of voltage step-down operation and voltage step-up operation with respect to any of constant voltage output control or constant current output control, but only the circuit configuration necessary for constant voltage output control is shown in Fig. 6 for the description. Also, the reference numeral showing the wiring in the figure represents the wiring itself, and in the description, it represents voltage or signal as well for the purpose of description.

In Fig. 6, bi-directional DC-DC converter 1 is connected between high-voltage side battery element 2 and low-voltage side battery element 3. In this way, the power of any one of high-voltage side battery element 2 and low-voltage side battery element 3 can be charged into the other in both directions.

First switching element 5 is connected to high-voltage side positive terminal 4 connected to the positive electrode of high-voltage side battery element 2. Also, inductor 6 is connected in series to first switching element 5. The positive electrode of low-voltage side battery element 3 is connected to the other end of inductor 6 via low-voltage side positive terminal 7.

Between the connection point of first switching element 5 and inductor 6 and the connection point of high-voltage side negative terminal 8 connected to the negative electrode of high-voltage side battery element 2 and low-voltage side negative terminal 9 connected to the negative electrode of low-voltage side battery element 3 is connected second switching element 10 so as to be paralleled to both battery elements.

Between high-voltage side positive terminal 4 and high-voltage side negative terminal 8 are connected high voltage detection circuit 12 which detects the voltage of high-voltage side battery element 2 to output high-voltage side control voltage 11 and high-voltage side capacitor 13 which smoothens the output voltage to high-voltage side positive terminal 4, respectively in parallel fashion. High voltage detection circuit 12 configures two resistors 12a, 12b connected in series for outputting midpoint voltage.

Also between low-voltage side positive terminal 7 and low-voltage side negative terminal 9 are connected, the same as for the high-voltage side, low voltage detection circuit 15 which detects the voltage of low-voltage side battery element 3 to output low-voltage side control voltage 14 and low-voltage side capacitor 16, respectively in parallel fashion. Low voltage detection circuit 15 configures two resistors 15a, 15b connected in series the same as for high voltage detection circuit 12.

High-voltage side control voltage 11 and low-voltage side control voltage 14 are connected to control voltage switching circuit 17. Control voltage switching circuit 17 is a circuit equivalent to a so-called 2-input 1-output type 3-terminal switch which outputs one of the two inputs. The output terminal of control voltage switching circuit 17 is connected to voltage error amplifier circuit 18. Also, switching signal 19a of control voltage switching circuit 17 is obtained from switching circuit 20. Switching circuit 20 generates and outputs switching signal 19a in accordance with the signal from an external control circuit not shown in the figure.

The output of voltage error amplifier circuit 18 is inputted to PWM (pulse width modulation) comparison circuit 21 which outputs pulse signals for ON-OFF operation of first switching element 5 and second switching element 10. The pulse signal is inputted to control circuit 25 as control signal 24 after being selected by voltage converting direction switching circuit 22 whether or not it passes through inverting circuit 23. Converting direction switching circuit 22 is equivalent to a 1-input 2-output type 3-terminal switch which changes over one input to any one of the two outputs. And, converting direction switching circuit 22 is controlled by switching signal 19a from switching circuit 20 the same as for control voltage switching circuit 17.

Control circuit 25 serves to execute inverting operation of first switching element 5 and second switching element 10 based on control signal 24 inputted. That is, control signal 24 is inputted as it is to first drive circuit 26 on one hand, and control signal 24 is inverted by PWM inverting circuit 27 and inputted to second drive circuit 28 on the other, thereby realizing the inverting operation. The input of control signal 24 to first drive circuit 26 and second drive circuit 28 is turned ON/OFF by operation switch 29. Operation switch 29 is controlled by operation signal 19b from switching circuit 20. Here, the circuit configuration is such that when control signal 24 is turned OFF by operation switch 29, first drive circuit 26 and second drive circuit 28 turn OFF first switching element 5 and second switching element 10 respectively.

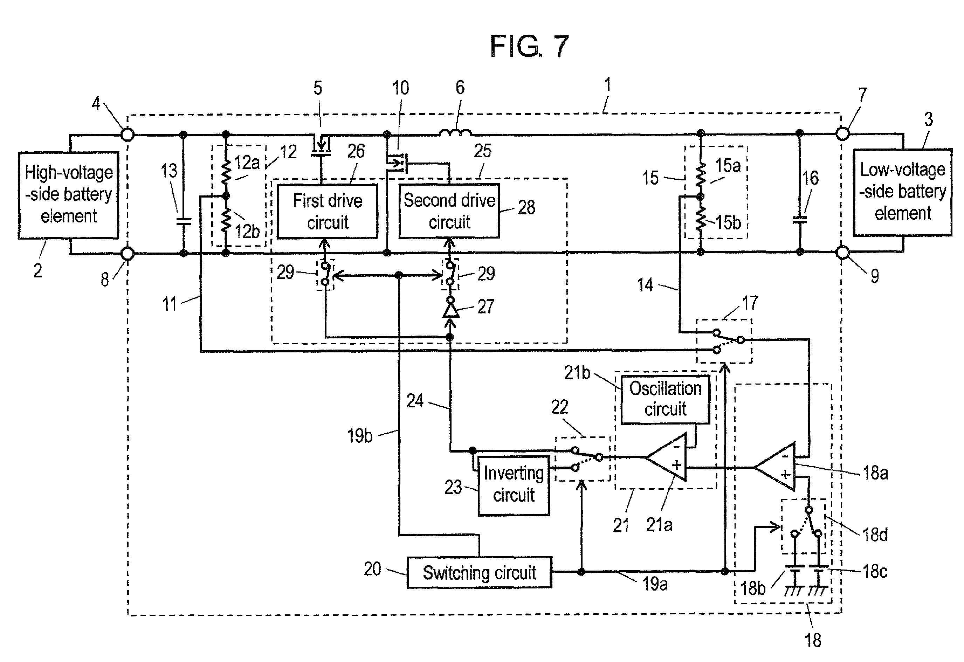

Next, before describing the operation of conventional bi-directional DC-DC converter 1, voltage error amplifier circuit 18 and PWM comparison circuit 21 mentioned in the block circuit diagram shown in Fig. 6 will be described in detail with reference to Fig. 7.

First, voltage error amplifier circuit 18 serves to input either high-voltage side control voltage 11 or low-voltage side control voltage 14 selected by control voltage switching circuit 17 to the inverting input side of operational amplifier 18a. On the other hand, high-voltage side or low-voltage side set-voltage is inputted to the non-inverting input side of operational amplifier 18a. In this case, since the set-voltages in voltage step-down operation and voltage step-up operation are different from each other, high-voltage side set-voltage 18b and low-voltage side set-voltage 18c are selected by set-voltage switching circuit 18d. Accordingly, set-voltage switching circuit 18d is also equivalent to 2-input 1-output type 3-terminal switch controlled by switching signal 19a from switching circuit 20. In this configuration, voltage error amplifier circuit 18 amplifies and outputs the difference between control voltage and set-voltage.

Next, PWM comparison circuit 21 inputs the output of voltage error amplifier circuit 18 to the non-inverting input side of operational amplifier 21a, and also inputs the reference rectangular wave voltage produced in oscillation circuit 21b to the inverting input side of operational amplifier 21a. In this way, an ON-OFF ratio pulse signal is produced through comparison of the both in accordance with the output of voltage error amplifier circuit 18.

The operation of the conventional bi-directional DC-DC converter will be described in the following. First, voltage step-down operation from the high-voltage side to the low-voltage side is described. Each switch 17, 18d, 22 having 3-terminal configuration in voltage step-down operation is changed over by switching signal 19a from switching circuit 20 in the direction shown by the solid line in the illustration. Also, operation switch 29 is turned ON by operation signal 19b. In this condition, low-voltage side control voltage 14 that is the output of low voltage detection circuit 15 is inputted to voltage error amplifier circuit 18 via control voltage switching circuit 17.

Voltage error amplifier circuit 18 amplifies and outputs the difference between low-voltage side control voltage 14 and low-voltage side set-voltage 18c. The output is inputted to PWM comparison circuit 21 to output a pulse signal in accordance with the difference. In this case, converting direction switching circuit 22 is not switched to inverting circuit 23 side, and therefore, the pulse signal is inputted as control signal 24 to control circuit 25.

In control circuit 25, control signal 24 is inputted as it is to first drive circuit 26, and control signal 24 inverted by PWM inverting circuit 27 is inputted to second drive circuit 28. In this way, first switching element 5 and second switching element 10 are inverse each other with respect to ON-OFF operation. As a result, the voltage or high-voltage side battery element 2 is decreased to charge low-voltage side battery element 3. The voltage of low-voltage side battery element 3 is then detected by low voltage detection circuit 15, and the operation after inputting the voltage to voltage error amplifier circuit 18 is repeated. Accordingly, feedback control is performed so that the voltage of low-voltage side battery element 3 becomes equal to low-voltage side set-voltage 18c, making it possible to perform voltage step-down operation of constant voltage.

The voltage step-up operation from the low-voltage side to the high-voltage side is described in the following. Each switch 17, 18d, 22 having 3-terminal configuration in voltage step-up operation is changed over by switching signal 19a from switching circuit 20 in the direction shown by the dotted line in the illustration. Also, operation switch 29 is turned ON by operation signal 19b. In this condition, high-voltage side control voltage 11 that is the output of high voltage detection circuit 12 is inputted to voltage error amplifier circuit 18 via control voltage switching circuit 17.

Voltage error amplifier circuit 18 amplifies and outputs the error between high-voltage side control voltage 11 and high-voltage side set-voltage 18b. The output is inputted to PWM comparison circuit 21 to output a pulse signal in accordance with the error. In this case, converting direction switching circuit 22 is switched to inverting circuit 23 side, and therefore, the pulse signal is inverted and inputted as control signal 24 to control circuit 25. In this way, since the pulse signal is inverted, the operation of first switching element 5 and second switching element 10 is inverse to the operation in voltage step-down mode, enabling the increase of voltage.

In control circuit 25, the same as in voltage step-down, first switching element 5 and second switching element 10 are inverse to each other with respect to ON-OFF operation. As a result, the voltage of low-voltage side battery element 3 is increased to charge high-voltage side battery element 2. The voltage of high-voltage side battery element 2 is then detected by high voltage detection circuit 12, and the operation after inputting the voltage to voltage error amplifier circuit 18 is repeated. Accordingly, the same as in voltage step-down, feedback control is performed and it becomes possible to perform voltage step-up operation of constant voltage.

When it is not necessary to operate the bi-directional DC-DC converter, operation switch 29 is turned OFF by operation signal 19b from switching circuit 20. Thus, first switching element 5 and second switching element 10 are turned OFF, both of the voltage step-up and decreasing operations are discontinued.

Through the above operation, a DC-DC converter capable of bi-directional voltage conversion by switching voltage step-down operation or voltage step-up operation has been realized.

Such a conventional bi-directional DC-DC converter is able to use voltage error amplifier circuit 18 and PWM comparison circuit 21 in common during voltage step-down operation and voltage step-up operation, and it is sure to simplify the circuit configuration. However, for achieving the purpose, it is necessary to simultaneously operate control voltage switching circuit 17, set-voltage switching circuit 18d, and converting direction switching circuit 22 in order to switch voltage step-down operation and voltage step-up operation. As a result, the configuration requires many 3-terminal switches capable of external control.

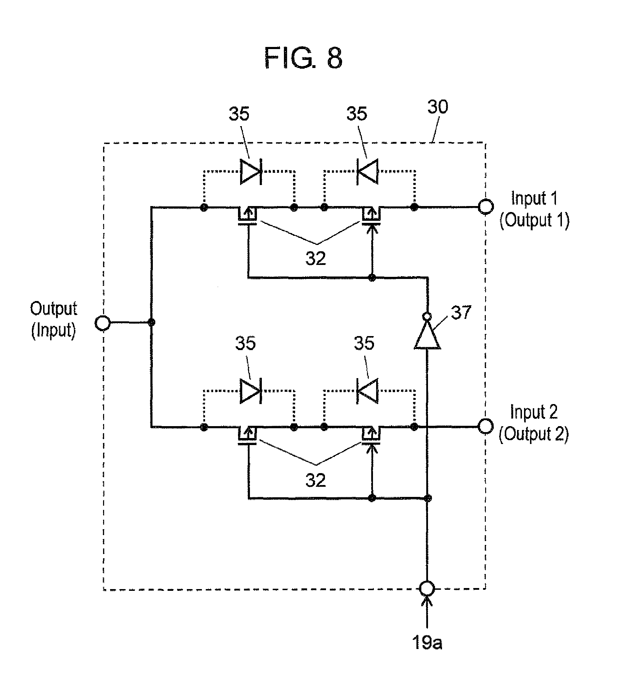

A combination of semiconductors (such as FET) is a general configuration as a 3-terminal switch capable of external control. An example of circuit configuration of such a 3-terminal switch is shown in Fig. 8. The 3-terminal switch 30 is applied to both of 2-input 1-output type 3-terminal switch (control voltage switching circuit 17, set-voltage switching circuit 18d in Fig. 7) and 1-input 2-output type 3-terminal switch (converting direction switching circuit 22 in Fig. 7).

The 3-terminal switch 30 shown in Fig. 8 is configured in that two sets of two series-connected FET 32 are used to invert the ON-OFF operation of FET 32 of each set according to the output of switching signal 19a, and thereby, one wiring route is turned ON, and the other is turned OFF. In this case, since FET 32 is formed with body diode 35 shown by dotted line, FET 32 inverse to each other are series-connected for preventing the counter-flow of current from the output to the input.

As described above, in an actual circuit configuration corresponding to a 3-terminal switch, it is required to use four pieces of FET 32 in total and one piece of switch inverting circuit 37. In the conventional configuration using three pieces of such 3-terminal switch, the configuration can be simplified as compared with the case of using a pair of DC-DC converter for voltage step-down operation and voltage step-up operation, but there still arises a problem of complicated circuit configuration as a whole.
Patent Document 1 Unexamined Japanese Patent Publication 2004-96826.

### DISCLOSURE OF THE INVENTION

The present invention is intended to provide a bi-directional DC-DC converter having a simple circuit configuration.

The bi-directional DC-DC converter of the present invention is configured as in the following (1) to (3) in the case of constant voltage output control.
(1) The outputs of a high voltage detection circuit and low voltage detection circuit are respectively inputted to a high-voltage side error amplifier circuit and low-voltage side error amplifier circuit independently disposed, which are inverse in polarity to each other.
(2) The output of the high-voltage side error amplifier circuit or the output of the low-voltage side error amplifier circuit is selected by a converting direction switching circuit.
(3) The output is inputted to a control circuit from a common PWM comparison circuit with respect to voltage step-up and decreasing operation, thereby making a configuration for driving the first switching element and the second switching element.

Thus, inverting circuit 23, control voltage switching circuit 17, and set-voltage switching circuit 18d which are conventionally needed can be omitted.

Also, the bi-directional DC-DC converter of the present invention is configured as in the following (1) to (2) in the case of constant current output control.
(1) As against the configuration for constant voltage output control, the high voltage detection circuit is replaced with a high-voltage side current detection circuit which detects the current flowing to a high-voltage side battery element to output a high-voltage side control voltage.
(2) The low voltage detection circuit is replaced with a low-voltage side current detection circuit which detects the current flowing to a low-voltage side battery element to output a low-voltage side control voltage.

Due to this configuration, inverting circuit 23, control voltage switching circuit 17, and set-voltage switching circuit 18d which are conventionally needed can also be omitted.

Also, the bi-directional DC-DC converter of the present invention is configured as in the following (1) to (7) in the case of executing the both of constant voltage output control and constant current output control.
(1) The first high-voltage side control voltage that is the output of the high voltage detection circuit is inputted to a first high-voltage side error amplifier circuit (which amplifies and outputs the difference of first high-voltage side set-voltage as against the first high-voltage side control voltage) independently disposed.
(2) The second high-voltage side control voltage that is the output of the high-voltage side current detection circuit is inputted to a second high-voltage side error amplifier circuit (which amplifies and outputs the difference of second high-voltage side set-voltage as against the second high-voltage side control voltage) independently disposed.
(3) The first low-voltage side control voltage that is the output of the low voltage detection circuit is inputted to a first low-voltage side error amplifier circuit independently disposed (which amplifies the difference of first low-voltage side set-voltage as against the first low-voltage side control voltage and outputs it after inverting the polarity with respect to the output of the first high-voltage side error amplifier circuit).
(4) The second low-voltage side control voltage that is the output of the low-voltage side current detection circuit is inputted to a second low-voltage side error amplifier circuit independently disposed (which amplifies the difference of second low-voltage side set-voltage as against the second low-voltage side control voltage and outputs it after inverting the polarity with respect to the output of the second high-voltage side error amplifier circuit).
(5) Either the output of the first high-voltage side error amplifier circuit and the output of the second high-voltage side error amplifier circuit, whichever higher, is outputted by a high-voltage side selector circuit.
(6) Either the output of the first low-voltage side error amplifier circuit and the output of the second low-voltage side error amplifier circuit, whichever lower, is outputted by a low-voltage side selector circuit.
(7) The output of the high-voltage side selector circuit or the output of the low-voltage side selector circuit is selected by a converting direction switching circuit, and the output is inputted to a control circuit from the common PWM comparison circuit with respect to voltage step-up and decreasing operation.

Thus, the configuration serves to drive the first switching element and the second switching element. In this way, inverting circuit 23, control voltage switching circuit 17, and set-voltage switching circuit 18d can also be omitted.

Also due to the configuration as in the following (1) to (6), inverting circuit 23, control voltage switching circuit 17, and set-voltage switching circuit 18d which are conventionally needed can be omitted.
(1) The first high-voltage side error amplifier circuit amplifies and outputs the difference of first high-voltage side control voltage as against the first high-voltage side set-voltage.
(2) The second high-voltage side error amplifier circuit amplifies and outputs the difference of second high-voltage side control voltage as against the second high-voltage side set-voltage.
(3) The high-voltage side selector circuit outputs either the output of the first high-voltage side error amplifier circuit or the output of the second high-voltage side error amplifier circuit whichever lower.
(4) The first low-voltage side error amplifier circuit amplifies the difference of first low-voltage side control voltage as against the first low-voltage side set-voltage, and outputs it after inverting the polarity with respect to the output of the first high-voltage side error amplifier circuit.
(5) The second low-voltage side error amplifier circuit amplifies the difference of second low-voltage side control voltage as against the second low-voltage side set-voltage, and outputs it after inverting the polarity with respect to the output of the second high-voltage side error amplifier circuit.
(6) The low-voltage side selector circuit outputs either the output of the first low-voltage side error amplifier circuit or the output of the second low-voltage side error amplifier circuit whichever higher.

Further, with the bi-directional DC-DC converter of the present invention configured as in the following (1) to (10) in the case of executing the both of constant voltage output control and constant current output control, inverting circuit 23, control voltage switching circuit 17, and set-voltage switching circuit 18d which are conventionally needed can also be omitted.
(1) The first high-voltage side control voltage that is the output of the high voltage detection circuit is inputted to a first high-voltage side error amplifier circuit independently disposed (which amplifies and outputs the difference of first high-voltage side set-voltage as against the first high-voltage side control voltage).
(2) The second high-voltage side control voltage that is the output of the high-voltage side current detection circuit is inputted to a second high-voltage side error amplifier circuit independently disposed (which amplifies and outputs the difference of second high-voltage side set-voltage as against the second high-voltage side control voltage).
(3) The first low-voltage side control voltage that is the output of the low voltage detection circuit is inputted to a first low-voltage side error amplifier circuit independently disposed (which amplifies the difference of first low-voltage side set-voltage as against the first low-voltage side control voltage and outputs it after inverting the polarity with respect to the output of the first high-voltage side error amplifier circuit).
(4) The second low-voltage side control voltage that is the output of the low-voltage side current detection circuit is inputted to a second low-voltage side error amplifier circuit independently disposed (which amplifies the difference of second low-voltage side set-voltage as against the second low-voltage side control voltage and outputs it after inverting the polarity with respect to the output of the second high-voltage side error amplifier circuit).
(5) The output of the high-voltage side error amplifier circuit or the output of the low-voltage side error amplifier circuit is selected by a converting direction switching circuit.
(6) When the output of the second high-voltage side error amplifier circuit is highest, the output of the second high-voltage side error amplifier circuit is selected by a control voltage selector circuit.
(7) When the output of the second low-voltage side error amplifier circuit is lowest, the output of the second low-voltage side error amplifier circuit is selected by a control voltage selector circuit.
(8) In other cases, the output of the converting direction switching circuit is selected by the control voltage selector circuit.
(9) The output is inputted to the control circuit from the common PWM comparison circuit with respect to voltage step-up and decreasing operation.
(10) The above configuration serves to drive the first switching element and the second switching element.

Further, in the above configuration, even with the configuration as in the following (1) to (5), inverting circuit 23, control voltage switching circuit 17, and set-voltage switching circuit 18d which are conventionally needed can be omitted.
(1) The first high-voltage side error amplifier circuit amplifies and outputs the difference of first high-voltage side control voltage as against the first high-voltage side set-voltage.
(2) The second high-voltage side error amplifier circuit amplifies and outputs the difference of second high-voltage side control voltage as against the second high-voltage side set-voltage.
(3) The first low-voltage side error amplifier circuit amplifies the difference of first low-voltage side control voltage as against the first low-voltage side set-voltage, and outputs it after inverting the polarity with respect to the output of the first high-voltage side error amplifier circuit.
(4) The second low-voltage side error amplifier circuit amplifies the difference of second low-voltage side control voltage as against the second low-voltage side set-voltage, and outputs it after inverting the polarity with respect to the output of the second high-voltage side error amplifier circuit.
(5) The control voltage selector circuit is configured in that the output of the second high-voltage side error amplifier circuit is selected when the output of the second high-voltage side error amplifier circuit is lowest, the output of the second low-voltage side error amplifier circuit is selected when the output of the second low-voltage side error amplifier circuit is highest, and the output of the converting direction switching circuit is selected in other cases.

As described above, according to the bi-directional DC-DC converter of the present invention, the number of voltage error amplifier circuits is increased, but the circuit configuration can be simplified by decreasing the number of 3-terminal switches from conventional three pieces to one piece, and in addition, no inverting circuit is needed. Accordingly, it is possible to realize a bi-directional DC-DC converter having a simple circuit configuration as a whole.

### BRIEF DESCRIPTION OF THE DRAWINGS

Fig. 1 is a block circuit diagram of a bi-directional DC-DC converter in the preferred embodiment 1 of the present invention.
Fig. 2 is a partially detailed block circuit diagram of a bi-directional DC-DC converter in the preferred embodiment 1 of the present invention.
Fig. 3 is a partially detailed block circuit diagram of a bi-directional DC-DC converter in the preferred embodiment 2 of the present invention.
Fig. 4 is a partially detailed block circuit diagram of a bi-directional DC-DC converter in the preferred embodiment 3 of the present invention.
Fig. 5 is a partially detailed block circuit diagram of a bi-directional DC-DC converter in the preferred embodiment 4 of the present invention.
Fig. 6 is a block circuit diagram of a conventional bi-directional DC-DC converter.
Fig. 7 is a partially detailed block circuit diagram of a conventional bi-directional DC-DC converter.
Fig. 8 is a circuit diagram of a 3-terminal switch of a conventional bi-directional DC-DC converter.

### Description of the Reference Numerals and Signs

- 1: Bi-directional DC-DC converter
- 2: High-voltage side battery element
- 3: Low-voltage side battery element
- 4: High-voltage side positive terminal
- 5: First switching element
- 6: Inductor
- 7: Low-voltage side positive terminal
- 8: High-voltage side negative terminal
- 9: Low-voltage side negative terminal
- 10: Second switching element
- 11: High-voltage side control voltage
- 12: High voltage detection circuit
- 14: Low-voltage side control voltage
- 15: Low voltage detection circuit
- 18b: High-voltage side set-voltage
- 18c: Low-voltage side set-voltage
- 18e: Second high-voltage side set-voltage
- 18f: First low-voltage side set-voltage
- 18g: Second low-voltage side set-voltage
- 18h: First high-voltage side set-voltage
- 19a: Switching signal
- 20: Switching circuit
- 21: PWM comparison circuit
- 22: Converting direction switching circuit
- 23: Inverting circuit
- 24: Control signal
- 25: Control circuit
- 50: High-voltage side error amplifier circuit
- 51: Low-voltage side error amplifier circuit
- 52: High-voltage side current detection circuit
- 53: Low-voltage side current detection circuit
- 54: First high-voltage side error amplifier circuit
- 55: Second high-voltage side error amplifier circuit
- 56: First low-voltage side error amplifier circuit
- 57: Second low-voltage side error amplifier circuit
- 58: High-voltage side selector circuit
- 59: Low-voltage side selector circuit
- 60: First low-voltage side control voltage
- 61: Second low-voltage side control voltage
- 62: First high-voltage side control voltage
- 63: Second high-voltage side control voltage
- 64: Control voltage selector circuit

### DETAILED DESCRIPTION OF THE PREFERRED EMBODIMENTS

The preferred embodiments of the present invention will be described in the following with reference to the drawings.

### Preferred Embodiment 1

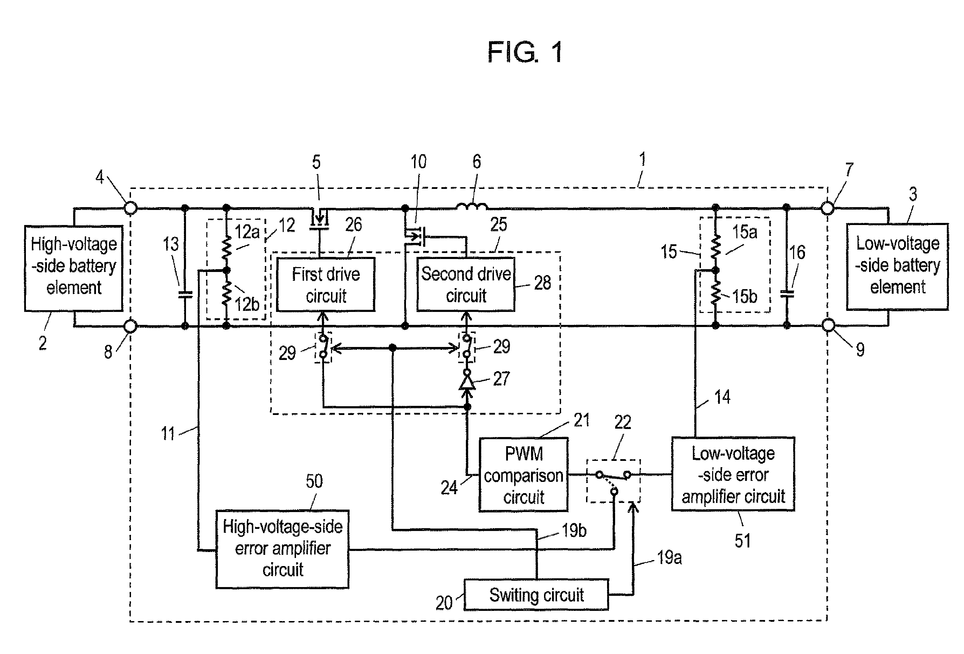

In the preferred embodiment 1, a case of constant voltage output control is disclosed. Fig. 1 is a block circuit diagram of a bi-directional DC-DC converter in the preferred embodiment 1 of the present invention.

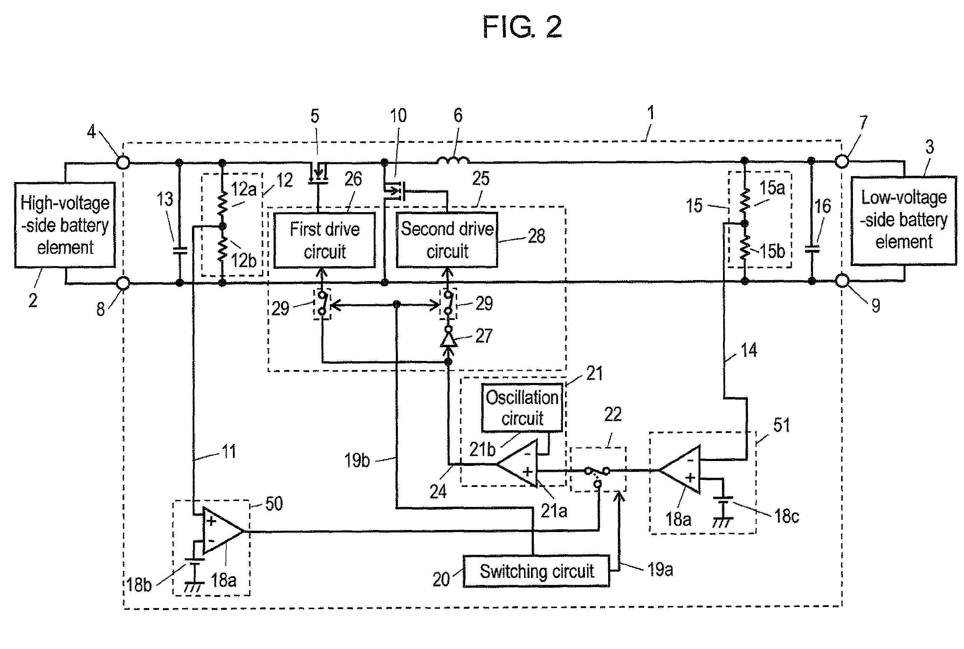

Fig. 2 is a partially detailed block circuit diagram of a bi-directional DC-DC converter in the preferred embodiment 1 of the present invention. In Fig. 1 and Fig. 2, same components as in conventional Fig. 6 and Fig. 7 are given same reference numerals, and the detailed description is omitted.

In Fig. 1, the difference in circuit configuration from the conventional example is as follows.
(1) The output (high-voltage side control voltage 11) of high voltage detection circuit 12 for detecting the voltage of high-voltage side battery element 2 is inputted to high-voltage side error amplifier circuit 50. The output (low-voltage side control voltage 14) of low voltage detection circuit 15 for detecting the voltage of low-voltage side battery element 3 is inputted to low-voltage side error amplifier circuit 51. These inputting operations are independently performed.
(2) Consequently, conventional control voltage switching circuit 17 is eliminated.
(3) The output of high-voltage side error amplifier circuit 50 and the output of low-voltage side error amplifier circuit 51 are inverse in polarity to each other. In the preferred embodiment 1, the non-inverting input and inverting input of operational amplifier 18a shown in Fig. 2 are inversely connected to each other so that the output of low-voltage side error amplifier circuit 51 is inverse in polarity to the output of high-voltage side error amplifier circuit 50.
(4) Consequently, conventional inverting circuit 23 is eliminated.
(5) The output of high-voltage side error amplifier circuit 50 and the output of low-voltage side error amplifier circuit 51 are respectively connected to the input terminal of converting direction switching circuit 22 formed of 3-terminal switch 30 of Fig. 8.
(6) The output of converting direction switching circuit 22 is connected to common PWM comparison circuit 21.
(7) The output of PWM comparison circuit 21 is connected to common control circuit 25.
   From the above differences, the comparison of circuit configurations of Fig. 1 and Fig. 6 makes it clear that in the preferred embodiment 1, voltage error amplifier circuit 18 is divided into high-voltage side error amplifier circuit 50 and low-voltage side error amplifier circuit 51, and also, control voltage switching circuit 17 is not included. Also, inverting circuit 23 is not included either. PWM comparison circuit 21 and control circuit 25 are in common the same as in the conventional configuration.
   The differences between the both are further detailed in the following from the comparison of Fig. 2 and Fig. 7.
(8) High-voltage side error amplifier circuit 50 and low-voltage side error amplifier circuit 51 are respectively provided with high-voltage side set-voltage 18b and low-voltage side set-voltage 18c.
(9) Consequently, set-voltage switching circuit 18d is eliminated.

From the above difference, the comparison of circuit configurations of Fig. 2 and Fig. 7 makes it clear that in the preferred embodiment 1, operational amplifier 18a is added because operational amplifier 18a is necessary for each of high-voltage side error amplifier circuit 50 and low-voltage side error amplifier circuit 51, but set-voltage switching circuit 18d is eliminated.

Accordingly, the differences in circuit configuration from the conventional one can be summarized as follows with reference to Fig. 1 and Fig. 2. In the preferred embodiment 1, one operational amplifier 18a is added, and instead, two pieces of 3-terminal switch 30 of control voltage switching circuit 17 and set-voltage switching circuit 18d are eliminated, and inverting circuit 23 is not used either. The others are same as in the conventional one. In this case, the circuit configuration of 3-terminal switch 30 capable of external control is complicated because of using many parts as described in Fig. 8. On the other hand, as to operational amplifier 18a, for example, IC with four operational amplifiers built into one package can be easily obtained, and therefore, addition of one operational amplifier 18a will not make the circuit configuration so much complicated. Accordingly, it is obvious that the circuit configuration of the preferred embodiment 1 is more simplified as compared with the configuration using many pieces of 3-terminal switch 30 and inverting circuit 23.

The operation of the bi-directional DC-DC converter in the preferred embodiment 1 will be described in the following.

First, voltage step-down operation from the high-voltage side to the low-voltage side is described. During the voltage step-down operation, converting direction switching circuit 22 is changed over by switching signal 19a produced from switching circuit 20 in the direction shown by the solid line. Also, operation switch 29 is turned ON by operation signal 19b. In this condition, high-voltage side control voltage 11 that is the output of high voltage detection circuit 12 is inputted to high-voltage side error amplifier circuit 50. Simultaneously, low-voltage side control voltage 14 that is the output of low voltage detection circuit 15 is inputted to low-voltage side error amplifier circuit 51. In this case, as shown in Fig. 2, for the connection to operational amplifier 18a, the non-inverting input and inverting input are inverse to each other in high-voltage side error amplifier circuit 50 and low-voltage side error amplifier circuit 51. In this way, the outputs of both circuits are inverse in polarity to each other.

As to each input voltage, the differences from high-voltage side set-voltage 18b and low-voltage side set-voltage 18c are amplified and outputted in a state of being inverse to each other from high-voltage side error amplifier 50 and low-voltage side error amplifier circuit 51.

The output of high-voltage side error amplifier circuit 50 and the output of low-voltage side error amplifier circuit 51 are inputted to converting direction switching circuit 22, but in the case of voltage step-down operation, the output of the latter is selected. In this way, the output voltage of the low-voltage side can be kept constant.

The output of converting direction switching circuit 22 is inputted to PWM comparison circuit 21, and a pulse signal corresponding to the difference, that is, control signal 24 is outputted. The detailed operation is same as in the conventional one. Control signal 24 is inputted to control circuit 25.

The operation of control circuit 25 is same as in the conventional one, and the detailed description is omitted. Due to control circuit 25, first switching element 5 and second switching element 10 are inverse in ON-OFF operation to each other. Here, FET is used for first switching element 5 and second switching element 10. As a result, the voltage of high-voltage side battery element 2 is decreased to charge low-voltage side battery element 3. In this case, the voltage of low-voltage side battery element 3 is detected by low voltage detection circuit 15 and inputted to low-voltage side error amplifier circuit 51, and the following operation is repeated. Thus, feedback control is executed so that the voltage of low-voltage side battery element 3 becomes equal to low-voltage side set-voltage 18c, thereby enabling the voltage step-down operation of constant voltage.

Next, voltage step-up operation from the low-voltage side to the high-voltage side is described. During voltage step-up operation, converting direction switching circuit 22 is changed over by switching signal 19a from switching circuit 20 in the direction shown by the dotted line. Also, operation switch 29 is turned ON by operation signal 19b. In this condition, high-voltage side control voltage 11 same as in voltage step-down operation is inputted to high-voltage side error amplifier circuit 50, and low-voltage side control voltage 14 is inputted to low-voltage side error amplifier circuit 51.

As to each input voltage, the differences from high-voltage side set-voltage 18b and low-voltage side set-voltage 18c are amplified and outputted in a state of being inverse in polarity each other from high-voltage side error amplifier 50 and low-voltage side error amplifier circuit 51.

The output of high-voltage side error amplifier circuit 50 and the output of low-voltage side error amplifier circuit 51 are inputted to converting direction switching circuit 22. Then, in the case of voltage step-up operation, the output of the former is selected. In this way, the output voltage of the high-voltage side can be kept constant.

The output of converting direction switching circuit 22 is inputted to PWM comparison circuit 21, and control signal 24 corresponding to the difference is outputted. Control signal 24 is inputted to control circuit 25.

The operation of control circuit 25 is same as in the conventional one, and the detailed description is omitted. Due to control circuit 25, first switching element 5 and second switching element 10 are inverse in ON-OFF operation to each other. In this case, since the output of high-voltage side error amplifier circuit 50 is inverse in polarity to the output of low-voltage side error amplifier circuit 51, the output of control signal 24 is inverse to that in voltage step-down operation. In this way, the voltage of low-voltage side battery element 3 is increased to charge high-voltage side battery element 2. In this case, the voltage of high-voltage side battery element 2 is detected by high voltage detection circuit 12 and inputted to high-voltage side error amplifier circuit 50, and the following operation is repeated. Thus, feedback control is executed so that the voltage of high-voltage side battery element 2 becomes equal to high-voltage side set-voltage 18b, thereby enabling the voltage step-up operation.

When it is not necessary to operate the bi-directional DC-DC converter, operation switch 29 is turned OFF by operation signal 19b from switching circuit 20 the same as in the conventional example. Thus, first switching element 5 and second switching element 10 are turned OFF, and both of the voltage step-up and decreasing operation are discontinued.

From the operation described above, it is obvious that voltage step-down operation and voltage step-up operation completely same as in the conventional example can be obtained with the circuit configuration of the preferred embodiment 1.

Due to the above configuration and operation, it is possible to realize a simple bi-directional DC-DC converter capable of constant voltage output control in both directions by switching the mode to voltage step-down or voltage step-up.

### Preferred Embodiment 2

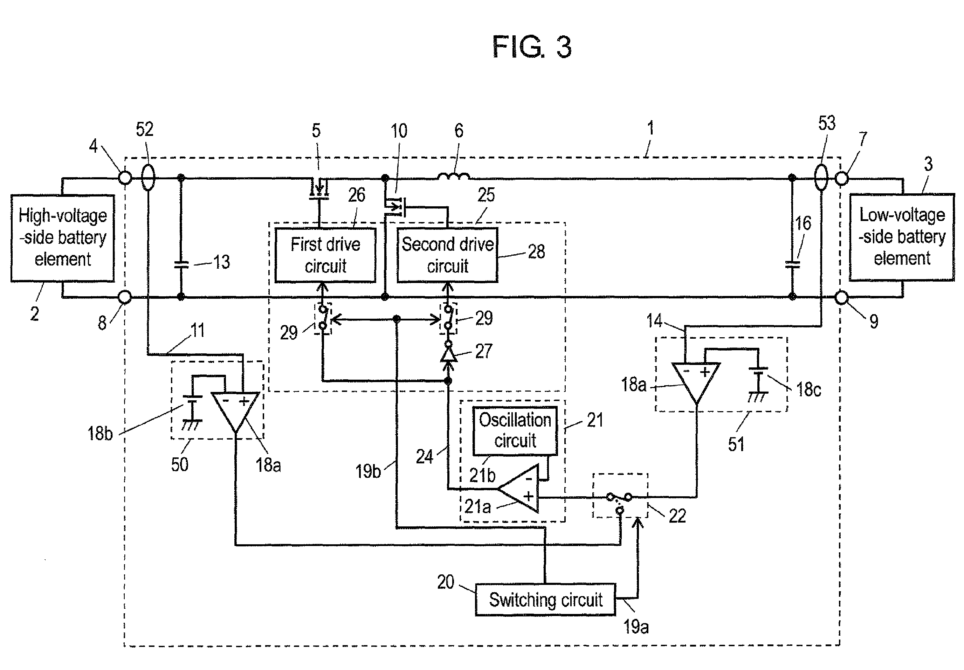

In the preferred embodiment 2, a case of constant current output control is disclosed. Fig. 3 is a partially detailed block circuit diagram of a bi-directional DC-DC converter in the preferred embodiment 2 of the present invention. In Fig. 3, same components as in Fig. 2 are given same reference numerals, and the detailed description is omitted.

First, in Fig. 3, the difference in circuit configuration from Fig. 2 is as follows.
(1) For the purpose of constant current output control, there are provided high-voltage side current detection circuit 52 and low-voltage side current detection circuit 53.
(2) Consequently, high voltage detection circuit 12 and low voltage detection circuit 15 are eliminated.

Other circuit configuration than the above is same as in the preferred embodiment 1. Accordingly, in the case of constant current output control, 3-terminal switch 30 includes only converting direction switching circuit 22, and inverting circuit 23 is not needed. That is, as compared with the conventional example, one operational amplifier 18a is added, but the circuit configuration is simplified as a whole.

The operation of the bi-directianal DC-DC converter 1 of Fig. 3 is completely same as in the preferred embodiment 1 with respect to both of voltage step-down operation and voltage step-up operation except that the purpose is constant current output control instead of constant voltage output control. That is, in the case of voltage step-down operation, first obtained is a voltage output that is proportional to the current flowing from low-voltage side current detection circuit 53 to low-voltage side battery element 3. Low-voltage side current detection circuit 53 is allowable to be formed of a current sensor such as Hall element, and it is also allowable to connect low resistance to inductor 6 in series and obtain it from its terminal voltage.

The voltage output proportional to the current is inputted to low-voltage side error amplifier circuit 51, where the difference as against low-voltage side set-voltage 18c is amplified and outputted. The following operation is same as in the preferred embodiment 1. As a result, feedback control is executed so that the current flowing to low-voltage side battery element 3 becomes equal to the current value decided by low-voltage side set-voltage 18c.

Also, in the case of voltage step-up operation, the voltage output proportional to the current flowing to high-voltage side battery element 2 in high-voltage side current detection circuit 52 is inputted to high-voltage side error amplifier circuit 50, where the difference as against high-voltage side set-voltage 18b is amplified and outputted. Because the output is inverse in polarity against the output of low-voltage side error amplifier circuit 51, the voltage step-up operation is performed. The inverting output is inputted to PWM comparison circuit 21 via converting direction switching circuit 22. As a result, feedback control is executed so that the current flowing in high-voltage side battery element 2 becomes equal to the current value decided by high-voltage side set-voltage 18b.

The role and operation of operation switch 29 are also same as in the preferred embodiment 1.

From the operation, it is obvious that voltage step-down operation and voltage step-up operation can be performed by constant current output control even with the circuit configuration of the preferred embodiment 2 the same as in the conventional configuration.

Due to the above configuration and operation, it is possible to realize a simple bi-directional DC-DC converter capable of constant current output control in both directions by changing over the mode to voltage step-down or voltage step-up.

### Preferred Embodiment 3

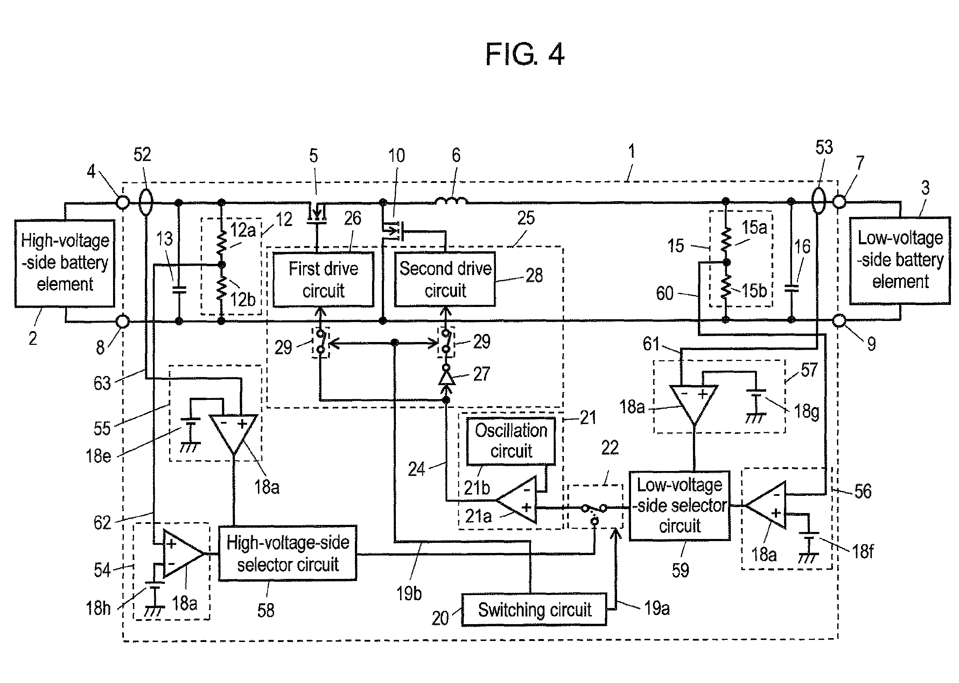

In the preferred embodiment 3, a case of constant voltage output control and constant current output control concurrently is disclosed. Fig. 4 is a partially detailed block circuit diagram of a bi-directional DC-DC converter in the preferred embodiment 3 of the present invention. In Fig. 4, same components as in Fig. 2 and Fig. 3 are given same reference numerals, and the detailed description is omitted.

First, the difference in circuit configuration of Fig. 4 from Fig. 2 is shown in the following.
(1) There are provided at the high-voltage side both of high voltage detection circuit 12 and high-voltage side current detection circuit 52. Similarly, there are provided at the low-voltage side both of low voltage detection circuit 15 and low-voltage side current detection circuit 53.
(2) Accordingly, voltage error amplifier circuits, that is, first high-voltage side error amplifier circuit 54, second high-voltage side error amplifier circuit 55, first low-voltage side error amplifier circuit 56, and second low-voltage side error amplifier circuit 57 are connected to each output in order.
(3) The set-voltages internally provided in each voltage error amplifier circuit include first high-voltage side set-voltage 18h, second high-voltage side set-voltage 18e, first low-voltage side set-voltage 18f, and second low-voltage side set-voltage 18g in order.
(4) The connection is made so that the output of first high-voltage side error amplifier circuit 54 becomes the amplified output of the difference of first high-voltage side set-voltage 18h as against first high-voltage side control voltage 62, and that the output of first low-voltage side error amplifier circuit 56 becomes the amplified output of the difference of first low-voltage side control voltage 60 as against first low-voltage side set-voltage 18f. As a result, the polarity is inverse to each other. For example, "the difference of first high-voltage side set-voltage 18h as against first high-voltage side control voltage 62" shows the difference of the former (first high-voltage side set-voltage 18h) from the latter (first high-voltage side control voltage 62). That is, in the circuit, the voltage inputted to the inverting input side of operational amplifier 18a of Fig. 4 is connected to the former (first high-voltage side set-voltage 18h), and the voltage inputted to the non-inverting input side is connected to the latter (first high-voltage side control voltage 62). Accordingly, to make the output of first high-voltage side error amplifier circuit 54 inverse in polarity to the output of first low-voltage side error amplifier circuit 56, in first low-voltage side error amplifier circuit 56, "the difference of first low-voltage side control voltage 60 as against first low-voltage side set-voltage 18f" is amplified and outputted, contrarily to the operation in first high-voltage side error amplifier circuit 54. This configuration is such that in the circuit, first low-voltage side control voltage 60 is connected to the inverting input side of operational amplifier 18a of Fig. 4, and first low-voltage side set-voltage 18f is connected to the non-inverting input side. It means that, due to this configuration, the difference of first low-voltage side set-voltage 18f as against first low-voltage side control voltage 60 is amplified, and the output is inverse in polarity to the output of first high-voltage side error amplifier circuit 54. The same holds true in the following description.
(5) The connection is made so that the output of second high-voltage side error amplifier circuit 55 becomes the amplified output of the difference of second high-voltage side set-voltage 18e as against second high-voltage side control voltage 63, and that the output of second low-voltage side error amplifier circuit 57 becomes the amplified output of the difference or second low-voltage side control voltage 61 as against second low-voltage side set-voltage 18g. In this way, the polarity is inverse to each other.
(6) There is provided high-voltage side selector circuit 58 which outputs the outputs of first high-voltage side error amplifier circuit 54 and second high-voltage side error amplifier circuit 55 whichever higher. Also, there is provided low-voltage side selector circuit 59 which outputs the outputs of first low-voltage side error amplifier circuit 56 and second low-voltage side error amplifier 57 whichever lower.
(7) The output of high-voltage side selector circuit 58 and the output or low-voltage side selector circuit 59 are connected to converting direction switching circuit 22.

Making the configuration as described above, it is possible to obtain a bi-directional DC-DC converter 1 requiring no inverting circuit 23 and having such a simplified circuit configuration that 3-terminal switch 30 is formed of only converting direction switching circuit 22, and capable of operation in which the detected voltage or current at the controlled side is constant.

The operation of bi-directional DC-DC converter 1 of the preferred embodiment 3 will be described in the following. An example of using bi-directional DC-DC converter 1 in a vehicle shown below is described.

As a system of mounting bi-directional DC-DC converter 1 in a vehicle, for example, assumed is a car battery (rated voltage 12V) as high-voltage side battery element 2 is the one having a capacitor unit (rated voltage 5V) with an electric double-layer capacitor connected in series or series-parallel thereto as low voltage-side battery element 3. In this case, the purpose of setting the rated voltage of the capacitor unit lower than the rated voltage of the battery is to reduce the size by decreasing the number of necessary capacitors. Consequently, it becomes necessary to provide a bi-directional DC-DC converter for charging between battery and capacitor.

In a system having such a configuration, electric power of the generator (parallel-connected to the battery) that is generated when the vehicle makes braking operation is once accumulated in a capacitor unit being excellent in quick charge/discharge characteristics, and the electric power of the capacitor unit is discharged to the sub-unit or battery during non-braking mode, and thereby, the braking energy can be regenerated as electric energy, enabling the reduction of fuel costs.

In the above system, the charging operation between the battery and capacitor is described. The configuration described here is such that the capacitor unit has an electric double-layer capacitor connected in series or series-parallel to make the rated voltage 5V, but the rated voltage is about 2.5V per electric double-layer capacitor, and therefore, it is allowable to comprise a single unit for which the rated voltage is 2.5V or to use a configuration increased in capacity by connecting a plurality of units in parallel fashion.

First, voltage step-down operation for charging from high-voltage side battery element 2 (battery or generator) to low-voltage side battery element 3 (capacitor unit) will be described. Converting direction switching circuit 22 in voltage step-down operation is changed over by switching signal 19a from switching circuit 20 in the direction shown by solid line. Accordingly, the output obtained from high voltage detection circuit 12 via first high-voltage side error amplifier circuit 54 or the output obtained from high-voltage side current detection circuit 52 via second high-voltage side error amplifier circuit 55, whichever higher output (obtained by high-voltage side selector circuit 58) is not used for the voltage step-down operation. Also, operation switch 29 is turned ON by operation signal 19b.

In this condition, first low-voltage side control voltage 60 that is the output voltage of low voltage detection circuit 15 is inputted to first low-voltage side error amplifier circuit 56. Also, second low-voltage side control voltage 61 that is the output voltage of low-voltage side current detection circuit 53 is inputted to second low-voltage side error amplifier circuit 57. In first low-voltage side error amplifier circuit 56, the difference of first low-voltage side control voltage 60 as against first low-voltage side set-voltage 18f is amplified and outputted. On the other hand, in second low-voltage side error amplifier circuit 57, the difference of second low-voltage side control voltage 61 as against second low-voltage side set-voltage 18g is amplified and outputted. These two output voltages are inputted to low-voltage side selector circuit 59. Low-voltage side selector circuit 59 compares the two voltages inputted, and outputs the lower voltage as it is. In this way, voltage step-down control is performed by constant voltage output control or constant current output control whichever closer to the set-voltage.

In the operation thereafter, same as in the preferred embodiments 1, 2, control signal 24 is generated by PWM comparison circuit 21 and it is inputted to control circuit 25 to execute constant voltage output control or constant current output control through feedback control of first switching element 5 and second switching element 10.

Such control corresponds to the operation of storing braking energy in a capacitor unit (not shown) as in the case of vehicle braking for example in the system of a vehicle described above. In that case, since no charge is accumulated in the capacitor unit, the terminal voltage is nearly 0V. Accordingly, first low-voltage side control voltage 60 is nearly 0V. And the power generated due to braking is inputted to bi-directional DC-DC converter 1 via high-voltage side positive terminal 4. Then, the set-voltage (first low-voltage side set-voltage 18f) of the capacitor unit at the controlled side is 5V as rated, and therefore, comparing with first low-voltage side control voltage 60 (nearly 0V), the difference of the latter as against the former, that is, the difference of the reference first low-voltage side set-voltage 18f as against first low-voltage side control voltage 60 is very large. Accordingly, because the voltage obtained by amplifying the difference of second low-voltage side control voltage 61 that is the output of low-voltage side current detection circuit 53 as against second low-voltage side set-voltage 18g is lower, low-voltage side selector circuit 59 selects the voltage and performs the constant current output control based on the voltage. In this way, the capacitor unit is first charged with constant current.

Thus, as the constant current charge goes on, the terminal voltage of the capacitor unit becomes higher, and soon the difference of first low-voltage side control voltage 60 that is the output of low voltage detection circuit 15 as against first low-voltage side set-voltage 18f becomes smaller. As a result, low-voltage side selector circuit 59 selects the voltage obtained by amplifying the difference of first low-voltage side control voltage 60 as against first low-voltage side set-voltage 18f, and executes constant voltage output control based on the voltage. As a result, it is possible to avoid voltage overshoot in full charge only caused due to constant current output control to the capacitor unit, and the charge can be automatically performed while suppressing deterioration of the capacitor unit.

The voltage step-up operation for charging from low-voltage side battery element 3 (capacitor unit) to high-voltage side battery element 2 (battery) will be described in the following. Converting direction switching circuit 22 in voltage step-up operation is changed over by switching signal 19a from switching circuit 20 in the direction shown by dotted line. Accordingly, the output obtained from low voltage detection circuit 15 via first low-voltage side error amplifier circuit 56 or the output obtained from low-voltage side current detection circuit 53 via second low-voltage side error amplifier circuit 57, whichever lower, the output ( obtained by low-voltage side selector circuit 59) is not used for the voltage step-up operation. Also, operation switch 29 is turned ON by operation signal 19b.

In this condition, first high-voltage side control voltage 62 that is the output voltage of high voltage detection circuit 12 is inputted to first high-voltage side error amplifier circuit 54. Also, second high-voltage side control voltage 63 that is the output voltage of high-voltage side current detection circuit 52 is inputted to second high-voltage side error amplifier circuit 55. In first high-voltage side error amplifier circuit 54, the difference of first high-voltage side set-voltage 18h as against first high-voltage control voltage 62 is amplified and outputted. On the other hand, in second high-voltage side error amplifier circuit 55, the difference of second high-voltage side set-voltage 18e as against second high-voltage side control voltage 63 is amplified and outputted. These two output voltages are inputted to high-voltage side selector circuit 58. High-voltage side selector circuit 58 compares the two voltages inputted, and outputs the higher voltage. Since the output is inverse in polarity as against the output in voltage step-down operation, voltage step-up control is performed by constant voltage output control or constant current output control, whichever closer to the set-voltage.

The operation thereafter is same as in the preferred embodiments 1, 2. That is, control signal 24 is generated by PWM comparison circuit 21 and it is inputted to control circuit 25 to execute constant voltage output control or constant current output control through feedback control of first switching element 5 and second switching element 10.

Such control corresponds to the operation of charging a battery (not shown) with the electric power stored in a capacitor unit due to vehicle braking for example in the system of a vehicle described above. In that case, when the terminal voltage of the battery is normal, the voltage is nearly 12V that is close to the rated voltage. Accordingly, first high-voltage side control voltage 62 is nearly 12V. And the power of the capacitor unit is inputted to bi-directional DC-DC converter 1 via low-voltage side positive terminal 7. Then, the set-voltage (first high-voltage side set-voltage 18h) of the battery at the controlled side is 12V as rated, and therefore, the difference of the first high-voltage side set-voltage 18h as against first high-voltage side control voltage 62, that is, the difference of the former from the latter is nearly zero. On the other hand, the output of second high-voltage side control voltage 63 is different from second high-voltage side set-voltage 18e due to the current flow, and the difference of the latter as against the former hss a negative value. This is because the connection of second high-voltage side control voltage 63 and second high-voltage side set-voltage 18e to operational amplifier 18a is inverse to the connection to operational amplifier 18a at the low-voltage side. High-voltage side selector circuit 58 selects and outputs the difference of first high-voltage side set-voltage 18h as against first high-voltage side control voltage 62 or the difference of second high-voltage side set-voltage 18e as against second high-voltage side control voltage 63, whichever higher in voltage. Accordingly, in this case, high-voltage side selector circuit 58 outputs the difference or the latter, and constant voltage output control is executed based on the output. In this way, since the battery is charged with constant voltage, it is possible to avoid voltage overshoot in full-charge mode, and to suppress deterioration of the battery in charging operation.

On the other hand, in case subsidiary equipment (for example, starter motor, electric power steering, etc.) which consumes a large amount of electric power is used, the terminal voltage of the battery is greatly lower than the rated voltage, that is, a few-volt order. Accordingly, first high-voltage side control voltage 62 is about a few volts. Even in that case, the set-voltage (first high-voltage side set-voltage 18h) of the battery at the controlled side is 12V as rated, and therefore, the difference of first high-voltage side set-voltage 18h as against first high-voltage control voltage 62 has a negative value that is very small. Accordingly, high-voltage side selector circuit 58 selects the voltage obtained by amplifying the difference of second high-voltage side set-voltage 18e as against second high-voltage side control voltage 63 because it is higher, and constant current output control is executed based on the voltage. In this way, the battery is first charged with constant current.

Thus, as the constant current charge goes on or when the subsidiary equipment consuming a large amount of power stops operating, the terminal voltage of the battery increases, and soon the difference of first high-voltage side set-voltage 18h as against first high-voltage side control voltage 62 becomes larger. In this way, high-voltage side selector circuit 58 selects the voltage obtained by amplifying the difference of first high-voltage side set-voltage 18h as against first high-voltage side control voltage 62, and constant voltage output control is executed based on the voltage. As a result, it is possible to avoid voltage overshoot in full-charge mode due to constant current output control for the battery, and automatic charge can be performed suppressing deterioration of the battery.

The role and operation of operation switch 29 are same as in the preferred embodiment 1.

From the operation, it is obvious that voltage step-down operation and voltage step-up operation can be performed by constant voltage output control or constant current output control even with the circuit configuration of the preferred embodiment 3 the same as in the conventional configuration.

Due to the above configuration and operation, it is possible to realize a simple bi-directional DC-DC converter capable of constant voltage output control or constant current output control in both directions by changing over the mode to voltage step-down or voltage step-up.

All the inverting input and non-inverting input to 4 pieces of operational amplifiers 18a in the preferred embodiment 3 are allowable to be configured in the form of completely inverse connection. In that case, however, two kinds of voltage inputted to high-voltage side selector circuit 58 are inverse in polarity. Therefore, it is necessary to be configured so that high-voltage side selector circuit 58 outputs the lower one of the two input voltages. Also, the two kinds of voltage inputted to low-voltage side selector circuit 59 are also inverse in polarity. It is therefore necessary to be configured so that low-voltage side selector circuit 59 outputs the higher one of the two input voltages.

### Preferred Embodiment 4

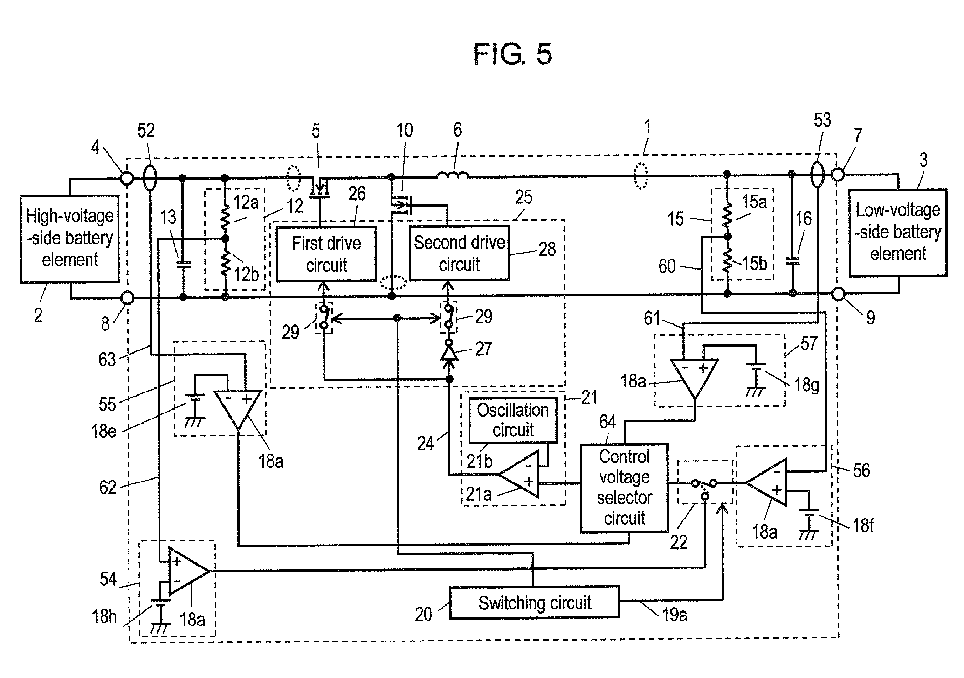

A case of performing concurrently both of constant voltage output control and constant current output control is disclosed in the preferred embodiment 4 the same as in the preferred embodiment 3. Fig. 5 is a partially detailed block circuit diagram of a bi-directional DC-DC converter in the preferred embodiment 4 of the present invention. In Fig. 5, same component elements as in Fig. 4 are given same reference numerals, and the detailed description is omitted.

First, the difference in configuration between Fig. 5 and Fig. 4 is shown in the following.
(1) The output of first high-voltage side error amplifier circuit 54 and the output of first low-voltage side error amplifier circuit 56 are connected to converting direction switching circuit 22.
(2) The output of second high-voltage side error amplifier circuit 55, the output of second low-voltage side error amplifier circuit 57, and the output of converting direction switching circuit 22 are connected to control voltage selector circuit 64.
(3) Control voltage selector circuit 64 selects the output of second high-voltage side error amplifier circuit 55 when it is highest, and the output of second low-voltage side error amplifier circuit 57 when it is lowest, and in other cases, it selects the output of converting direction switching circuit 22.
(4) The output of control voltage selector circuit 64 is inputted to PWM comparison circuit 21.
(5) In the above configuration, high-voltage side selector circuit 58 and low-voltage side selector circuit 59 are eliminated.

With use of such a configuration, inverting circuit 23 is unneeded, 3-terminal switch 30 is formed of only converting direction switching circuit 22, and further, high-voltage side selector circuit 58 and low-voltage side selector circuit 59 are included in control voltage selector circuit 64, thereby simplifying the circuit configuration. Also, it is possible to obtain a bi-directional DC-DC converter capable of operation so that the voltage or current detected at the controlled side becomes constant.

The differences from the preferred embodiment 3 are mainly described in the following with respect to the operation or bi-directional DC-DC converter 1 in the preferred embodiment 4.

First, voltage step-down operation for charging from high-voltage side battery element 2 to low-voltage side battery element 3 is described. In this case, converting direction switching circuit 22 is changed over in the direction shown by solid line. Accordingly, the output obtained from high voltage detection circuit 12 via first high-voltage side error amplifiers circuit 54 is not used for voltage step-down operation. Also, operation switch 29 is turned ON by operation signal 19b.

In this condition, first low-voltage side control voltage 60 that is the output voltage of low voltage detection circuit 15 is inputted to first low-voltage side error amplifier circuit 56. Also, second high-voltage side control voltage 63 that is the output voltage of high-voltage side current detection circuit 52 is inputted to second high-voltage side error amplifier circuit 55. Further, second low-voltage side control voltage 61 that is the output voltage of low-voltage side current detection circuit 53 is inputted to second low-voltage side error amplifier circuit 57. These inputs are amplified and outputted with respect to the differences from first low-voltage side set-voltage 18f, second high-voltage side set-voltage 18e, and second low-voltage side set-voltage 18g respectively in order. The voltage that is a reference for obtaining the difference in the preferred embodiment 4 is a control voltage at the high-voltage side and a set-voltage at the low-voltage side.

All the three kinds of outputs are inputted to control voltage selector circuit 64. The output of first low-voltage side error amplifier circuit 56 is inputted via converting direction switching circuit 22. Control voltage selector circuit 64 selects the output of second high-voltage side error amplifier circuit 55 when it is highest, and the output of second low-voltage side error amplifier circuit 57 when it is lowest, and in other cases, it selects the output of converting direction switching circuit 22. Since the description here is for voltage step-down operation, the operation of control voltage selector circuit 64 is described.

As described in the preferred embodiment 3, at the initial stage of voltage step-down operation, low-voltage side battery element 3 is not charged and at level of about 0V. In this case, to make low-voltage side battery element 3 fully charged, current flows from high-voltage side battery element 2 to low-voltage side battery element 3. Then the current value is very large because the voltage difference between high-voltage side battery element 2 and low-voltage side battery element 3 is maximized. The current value is outputted as second low-voltage side control voltage 61 from low-voltage side current detection circuit 53 that detects the current value to low-voltage side battery element 3. The output is inputted to second low-voltage side error amplifier circuit 57, and the difference as against second low-voltage side set-voltage 18g is amplified. Accordingly, the current value to low-voltage side battery element 3 immediately exceeds second low-voltage side set-voltage 18g. In this case, in operational amplifier 18a of second low-voltage side error amplifier circuit 57 of Fig. 5 , second low-voltage side control voltage 61 is inputted to the inverting input side, and second low-voltage side set-voltage 18g is inputted to the non-inverting input side. Therefore, when the former is highest, the output of second low-voltage side error amplifier circuit 57 is lowest being negative.

As a result, control voltage selector circuit 64 selects the output of second low-voltage side error amplifier circuit 57 because it is lowest as described above, and outputs it to PWM comparison circuit 21. The operation thereafter is same as in the preferred embodiment 3 that constant current output control is executed so that it becomes a current value corresponding to second low-voltage side set-voltage 18g.

Thus, second low-voltage side control voltage 61 that is the current value to the present low-voltage side battery element 3 approaches second low-voltage side set-voltage 18g, and the output of second low-voltage side error amplifier circuit 57 is not lowest. As a result, control voltage selector circuit 64 selects the output of converting direction switching circuit 22 as described above. In this way, constant voltage output control is executed so that first low-voltage side control voltage 60 corresponding to the voltage value of low-voltage side battery element 3 becomes the voltage value set by first low-voltage side set-voltage 18f.

Due to the above operation, same as in the preferred embodiment 3, constant current output control is first executed for charging, and when nearly fully charged, it is automatically changed over to constant voltage output control. As a result, it is possible to avoid voltage overshoot in full-charge mode to low-voltage side battery element 3 and to suppress deterioration of low-voltage side battery element 3.

Further, in case the current is abruptly increased due to some trouble during constant voltage output control in the preferred embodiment 4, the output of second low-voltage side error amplifier circuit 57 becomes lowest, and the mode is shifted to constant current output control. Accordingly, a large amount of current flows and it is also possible to avoid the occurrence of danger such as overcharge or overheat.

The voltage step-down operation is performed in this way, and in this case, high-voltage side current detection circuit 52 detects the current value to high-voltage side battery element 2, and therefore, the current flows in the opposite direction in the case of voltage step-down operation. Accordingly, the output of second high-voltage side error amplifier circuit 55 will not usually become highest, and the output of control voltage selector circuit 64 in voltage step-down operation becomes either the output of second low-voltage side error amplifier circuit 57 or the output of converting direction switching circuit 22. However, in case of detecting a large amount of current to high-voltage side battery element 2, that is essentially unexpected to flow thereto, the output of second high-voltage side error amplifier circuit 55 will become highest. And, constant current output control is executed so that the output of control voltage selector circuit 64 becomes the output of second high-voltage side error amplifier circuit 55 and the current value decided by second high-voltage side set-voltage 18e. In this way, it is possible to prevent over-current. From such a point of view, it is configured so that the operation is performed on the safe side in the preferred embodiment 4.

When a large amount of current to high-voltage side battery element 2 is detected, the output of second high-voltage side error amplifier circuit 55 becomes highest, and this is because the connection of non-inverting input and inverting input to operational amplifier 18a of second high-voltage side error amplifier circuit 55 is in inverse connection of second low-voltage side error amplifier circuit 57.

Next, voltage step-up operation for charging from low-voltage side battery element 3 to high-voltage side battery element 2 is described. Also in this case, converting direction switching circuit 22 is changed over in the direction shown by dotted line. Accordingly, the output obtained from low voltage detection circuit 15 via first low-voltage side error amplifier circuit 56 is not used for voltage step-up operation. Also, operation switch 29 is turned ON by operation signal 19b.

In this condition, first high-voltage side control voltage 62 that is the output voltage of high voltage detection circuit 12 is inputted to first high-voltage side error amplifier circuit 54. Second high-voltage side control voltage 63 that is the output voltage of high-voltage side current detection circuit 52 is inputted to second high-voltage side error amplifier circuit 55. Second low-voltage side control voltage 61 that is the output voltage of low-voltage side current detection circuit 53 is inputted to second low-voltage side error amplifier circuit 57. These inputs are amplified and outputted with respect to the differences from first high-voltage side set-voltage 18h, second high-voltage side set-voltage 18e, and second low-voltage side set-voltage 18g respectively in order.

All the three kinds of outputs are inputted to control voltage selector circuit 64. The output of first high-voltage side error amplifier circuit 54 is inputted via converting direction switching circuit 22. The selecting operation of control voltage selector circuit 64 is same as described in the description of voltage step-down operation.

The operation of control voltage selector circuit 64 in voltage step-up operation will be described in the following.

First, when first high-voltage side control voltage 62 corresponding to the voltage of high-voltage side battery element 2 is very close to first high-voltage side set-voltage 18h, almost no current flows. Therefore, there is no possibility that the output of second high-voltage side error amplifier circuit 55 becomes highest or the output of second low-voltage side error amplifier circuit 57 becomes lowest. Accordingly, control voltage selector circuit 64 selects the output of converting direction switching circuit 22, and constant voltage output control is performed.

Next, in case the voltage of high-voltage side battery element 2 becomes lowered due to the operation of a load (auxiliary unit), a large amount of current will flow in high-voltage side battery element 2. As a result, the output of second high-voltage side error amplifier circuit 55 becomes highest, and control voltage selector circuit 64 selects the output of second high-voltage side error amplifier circuit 55, and constant current output control is performed. The detail is the same as in voltage step-down operation.

After that, when second high-voltage side control voltage 63 approaches second high-voltage side set-voltage 18e, the output of second high-voltage side error amplifier circuit 55 is not at a highest level. As a result, control voltage selector circuit 64 selects the output of converting direction switching circuit 22, and constant voltage output control is performed.

Due to the above operation, the same as in voltage step-down operation, constant current output control is first executed for charging, and when nearly fully charged, it is automatically changed over to constant voltage output control. As a result, it is possible to avoid voltage overshoot in full-charge mode to high-voltage side battery element 2 and to suppress deterioration of high-voltage side battery element 2.

And with respect to current increase in both directions due to some trouble during constant voltage output control, the same as in voltage step-down operation, it is automatically shifted to constant current output control, and the operation is performed on the safe side during voltage step-up operation as well.

Also, the role and operation of operation switch 29 are same as in the preferred embodiment 1.

From the above operation, it is obvious that voltage step-down operation and voltage step-up operation can be executed by constant voltage output control or constant current output control with use of the circuit configuration in the preferred embodiment 4 the same as in the conventional example.

Due to the above configuration and operation, it is possible to actually realize a bi-directional DC-DC converter capable of constant voltage output control or constant current output control in both directions by changing over the mode to voltage step-down or voltage step-up, which is more simplified in circuit configuration than the preferred embodiment 3.

In the preferred embodiment 4, high-voltage side current detection circuit 52 and low-voltage side current detection circuit 53 are respectively disposed just in the vicinity of high-voltage side battery element 2 and low-voltage side battery element 3, but it is also allowable to disposed them in any of the positions shown by oval dotted lines in Fig. 5.

Also, it is allowable to use such a configuration that all the inverting input and non-inverting input to 4 pieces of operational amplifiers 18a in the preferred embodiment 4 are inverse in connection. In that case, the voltage inputted to control voltage selector circuit 64 is inverse in polarity, and therefore, it is necessary to be configured in that control voltage selector circuit 64 selects the output of second high-voltage side error amplifier circuit 55 when the output is lowest, and the output of low-voltage side error amplifier circuit 57 when the output is highest, and in other cases, the output of converting direction switching circuit 22.

### INDUSTREAL APPLICABILITY

In the bi-directional DC-DC converter of the present invention, no inverting circuit is needed, and the number of complicated 3-terminal switches can be reduced from three to one in the circuit configuration, thereby simplifying the circuit configuration, and it can be used as a simplified bi-directional DC-DC converter capable of power conversion in both directions.

## Claims

1. A bi-directional DC-DC converter comprising:
a first switching element and an inductor connected in series between a positive terminal of a high-voltage side battery element and a positive terminal of a low-voltage side battery element;
a second switching element with one end connected to a connection point of the first switching element and the inductor, and the other end connected in parallel to a negative terminal of the high-voltage side battery element and a negative terminal of the low-voltage side battery element;
a high-voltage side error amplifier circuit which amplifies and outputs a difference between a voltage proportional to a voltage of the high-voltage side battery element and a high-voltage side set-voltage;
a low-voltage side error amplifier circuit which amplifies a difference between a voltage proportional to a voltage of the low-voltage side battery element and a low-voltage side set-voltage, and outputs it after inverting the polarity with respect to the output of the high-voltage side error amplifier circuit;
a converting direction switching circuit which selects either the output of the high-voltage side error amplifier circuit or the output of the low-voltage side error amplifier;
a PWM comparison circuit which compared the output of the converting direction switching circuit with a reference triangular wave voltage, and outputs a control signal for ON-OFF drive of the first switching element and the second switching element; and
a control circuit for inverting operation of the first switching element and the second switching element based on the control signal.

2. The bi-directional DC-DC converter of claim 1,
wherein the bi-directional DC-DC converter is connected between a high-voltage side battery element and a low-voltage side battery element in order to charge electric power of one of the high-voltage side battery element and the low-voltage side battery element to the other,
wherein the bi-directional DC-DC converter includes:
the first switching element connected in series to a positive terminal of the high-voltage side battery element;
the inductor connected in series to the first switching element;
the second switching element with one end connected to a connection point of the first switching element and the inductor, and the other end connected in parallel to a negative terminal of the high-voltage side battery element and a negative terminal of the low-voltage side battery element;
a high voltage detection circuit which detects a voltage of the high-voltage side battery element and outputs a high-voltage side control voltage,
the high-voltage side error amplifier circuit which amplifies and outputs a difference between the high-voltage side control voltage and the high-voltage side set-voltage;
a low voltage detection circuit which detects a voltage of the low-voltage side battery element and outputs a low-voltage side control voltage,
the low-voltage side error amplifier circuit which amplifies a difference between the low-voltage side control voltage and the low-voltage side set-voltage and outputs it after inverting the polarity with respect to the output of the high-voltage side error amplifier circuit;
a switching circuit which generates a switching signal for either voltage step-down operation from the high-voltage side battery element to the low-voltage side battery element or voltage step-up operation from the low-voltage side battery element to the high-voltage side battery element;
the converting direction switching circuit which selects either the output of the high-voltage side error amplifier circuit or the output of the low-voltage side error amplifier circuit in accordance with the switching signal;
the PWM comparison circuit which compares the output of the converting direction switching circuit with the reference triangular wave voltage, and outputs the control signal for ON-OFF drive of the first switching element and the second switching elements; and
the control circuit which executes inverting operation of the first switching element and the second switching element based on the control signal.

3. The bi-directional DC-DC converter of claim 2,
wherein the high voltage detection circuit is replaced with a high-voltage side current detection circuit which detects a current to the high-voltage side battery element and outputs a high-voltage side control voltage, and
the low voltage detection circuit is replaced with a low-voltage side current detection circuit which detects a current to the low-voltage side battery element and outputs a low-voltage side control voltage.

4. A bi-directional DC-DC converter, comprising:
a first switching element and an inductor connected in series between a positive terminal of a high-voltage side battery element and a positive terminal or a low-voltage side battery element;
a second switching element with one end connected to a connection point of the first switching element and the inductor, and the other end connected in parallel to a negative terminal of the high-voltage side battery element and a negative terminal of the low-voltage side battery element;
a first high-voltage side error amplifier circuit which amplifies and outputs a difference between a voltage proportional to a voltage of the high-voltage side battery element and a first high-voltage side set-voltage;
a second high-voltage side error amplifier circuit which amplifies and outputs a difference between a voltage proportional to a current to the high-voltage side battery element and a second high-voltage side set-voltage;
a high-voltage side selector circuit which outputs either the output of the first high-voltage side error amplifier circuit or the output of the second high-voltage side error amplifier circuit whichever higher;
a first low-voltage side error amplifier circuit which amplifies a difference between a voltage proportional to a voltage of the low-voltage side battery element and a first low-voltage side set-voltage, and outputs it after inverting the polarity with respect to the output of the first high-voltage side error amplifier circuit;
a second low-voltage side error amplifier circuit which amplifies a difference between a voltage proportional to a current to the low-voltage side battery element and a second low-voltage side set-voltage, and outputs it after inverting the polarity with respect to the output of the second high-voltage side error amplifier circuit;
a low-voltage side selector circuit which outputs either the output of the first low-voltage side error amplifier circuit or the output of the second low-voltage side error amplifier circuit whichever lower;
a converting direction switching circuit which selects either the output of the high-voltage side selector circuit or the output of the low-voltage side selector circuit;
a PWM comparison circuit which compares the output of the converting direction switching circuit with a reference triangular wave voltage and outputs a control signal for ON-OFF drive of the first switching element and the second switching element; and
a control circuit which executes inverting operation of the first switching element and the second switching element based on the control signal.

5. The bi-directional DC-DC converter of claim 4,
wherein the bi-directional DC-DC converter is connected between a high-voltage side battery element and a low-voltage side battery element in order to charge electric power of one of the high-voltage side battery element and the low-voltage side battery element to the other,
wherein the bi-directional DC-DC converter includes:
the first switching element connected in series to a positive terminal of the high-voltage side battery element;
the inductor connected in series to the first switching element;
the second switching element with one end connected to a connection point of the first switching element and the inductor, and the other end connected in parallel to a negative terminal of the high-voltage side battery element and a negative terminal of the low-voltage side battery element;
a high voltage detection circuit which detects a voltage of the high-voltage side battery element and outputs a first high-voltage side control voltage;
the first high-voltage side error amplifier circuit which amplifies and outputs a difference between the first high-voltage side set-voltage as against the first high-voltage side control voltage;
a high-voltage side current detection circuit which detects a current to the high-voltage side battery element and outputs a second high-voltage side control voltage;
the second high-voltage side error amplifier circuit which amplifies and outputs the difference of the second high-voltage side set-voltage as against the second high-voltage side control voltage;
the high-voltage side selector circuit which outputs either the output of the first high-voltage side error amplifier circuit or the output of the second high-voltage side error amplifier whichever higher;
a low voltage detection circuit which detects a voltage of the low-voltage side battery element and outputs a first low-voltage side control voltage;
the first low-voltage side error amplifier circuit which amplifies the difference of the first low-voltage side set-voltage as against the first low-voltage side control voltage, and outputs it after inverting the polarity with respect to the output of the first high-voltage side error amplifier circuit.
a low voltage-side current detection circuit which detects a current to the low-voltage side battery element and outputs a second low-voltage side control voltage;
the second low-voltage side error amplifier circuit which amplifies the difference of the second low-voltage side set-voltage as against the second low-voltage side control voltage, and outputs it after inverting the polarity with respect to the output of the second high-voltage side error amplifier circuit;
the low-voltage side selector circuit which outputs either the output of the first low-voltage side error amplifier circuit or the output of the second low-voltage side error amplifier circuit whichever lower;
a switching circuit which generates a switching signal for either voltage step-down operation from the high-voltage side battery element to the low-voltage side battery element or voltage step-up operation from the low-voltage side battery element to the high-voltage side battery element;
the converting direction switching circuit which selects either the output of the high-voltage side selector circuit or the output of the low-voltage side selector circuit in accordance with the switching signal;
the PWM comparison circuit which compares the output of the converting direction switching circuit with the reference triangular wave voltage and outputs the control signal for ON-OFF drive of the first switching element and the second switching element; and
the control circuit which executes inverting operation of the first switching element and the second switching element based on the control signal.

6. The bi-directional DC-DC converter of claim 5,
wherein the first high-voltage side error amplifier circuit amplifies and outputs the difference of first high-voltage side control voltage as against first high-voltage side set-voltage;
the second high-voltage side error amplifier circuit amplifies and outputs the difference of second high-voltage side control voltage as against second high-voltage side set-voltage;
the high-voltage side selector circuit outputs either the output of the first high-voltage side error amplifier circuit or the output of the second high-voltage side error amplifier circuit whichever lower;
the first low-voltage side error amplifier circuit amplifies the difference of first low-voltage side control voltage as against the first low-voltage side set-voltage, and outputs it after inverting the polarity with respect to the output of the first high-voltage side error amplifier circuit;
the second low-voltage side amplifier circuit amplifies the difference of second low-voltage side control voltage as against second low-voltage side set-voltage, and outputs it after inverting the polarity with respect to the output of the second high-voltage side error amplifier circuit; and
the low-voltage side selector circuit outputs either the output of the first low-voltage side error amplifier circuit or the output of the second low-voltage side error amplifier circuit whichever higher.

7. A bi-directional DC-DC converter, comprising:
a first switching element and an inductor connected in series between a positive terminal of a high-voltage side battery element and a positive terminal of a low-voltage side battery element;
a second switching element with one end connected to a connection point of the first switching element and the inductor, and the other end connected in parallel to a negative terminal of the high-voltage side battery element and a negative terminal of the low-voltage side battery element;
a first high-voltage side error amplifier circuit which amplifies and outputs a difference between a voltage proportional to a voltage of the high-voltage side battery element and a first high-voltage side set-voltage;
a second high-voltage side error amplifier circuit which amplifies and outputs a difference between a voltage proportional to a current to the high-voltage side battery element and a second high-voltage side set-voltage;
a first low-voltage side error amplifier circuit which amplifies a difference between a voltage proportional to a voltage of the low-voltage side battery element and a first low-voltage side set-voltage, and outputs it after inverting the polarity with respect to the output of the first high-voltage side error amplifier circuit;
a second low-voltage side error amplifier circuit which amplifies a difference between a voltage proportional to a current to the low-voltage, side battery element and a second low-voltage side set-voltage, and outputs it after inverting the polarity with respect to the output of the second high-voltage side error amplifier circuit;
a converting direction switching circuit which selects either the output of the first high-voltage side error amplifier circuit or the output of the first low-voltage side error amplifier circuit;
a control voltage selector circuit which selects the output of the second high-voltage side error amplifier circuit when the output of the second high-voltage side error amplifier circuit is highest, and the output of the second low-voltage side error amplifier circuit when the output of the second low-voltage side error amplifier circuit is lowest, and in other cases, it selects the output of the converting direction switching circuit;
a PWM comparison circuit which compares the output of the control voltage selector circuit with a reference triangular wave voltage and outputs a control signal for ON-OFF drive of the first switching element and the second switching element; and
a control circuit for inverting operation of the first switching element and the second switching element in accordance with the control signal.

8. The bi-directional DC-DC converter of claim 7,
wherein the bi-directional DC-DC converter is connected between a high-voltage side battery element and a low-voltage side battery element in order to charge electric power of one of the high-voltage side battery element and the low-voltage side battery element to the other,
wherein the bi-directional DC-DC converter includes:
the first switching element connected in series to a positive terminal of the high-voltage side battery element;
the inductor connected in series to the first switching element;
the second switching element with one end connected to a connection point of the first switching element and the inductor, and the other end connected in parallel to a negative terminal of the high-voltage side battery element and a negative terminal of the low-voltage side battery element;
a high voltage detection circuit which detects a voltage of the high-voltage side battery element and outputs a first high-voltage side control voltage;
the first high-voltage side error amplifier circuit which amplifies and outputs the difference of the first high-voltage side set-voltage as against the first high-voltage side control voltage;
a high-voltage side current detection circuit which detects a current to the high-voltage side battery element and outputs a second high-voltage side control voltage;
the second high-voltage side error amplifier circuit which amplifies and outputs the difference of the second high-voltage side set-voltage as against the second high-voltage side control voltage;
a low voltage detection circuit which detects a voltage of the low-voltage side battery element and outputs a first low-voltage side control voltage;
the first low-voltage side error amplifier circuit which amplifies the difference of the first low-voltage side set-voltage as against the first low-voltage side control voltage, and outputs it after inverting the polarity with respect to the output of the first high-voltage side error amplifier circuit;
a low-voltage side current detection circuit which detects a current to the low-voltage side battery element and outputs a second low-voltage side control voltage;
the second low-voltage side error amplifier circuit which amplifies the difference of the second low-voltage side set-voltage as against the second low-voltage side control voltage, and outputs it after inverting the polarity with respect to the output of the second high-voltage side error amplifier circuit;
a switching circuit which generates a switching signal for either voltage step-down operation from the high-voltage side battery element to the low-voltage side battery element or voltage step-up operation from the low-voltage side battery element to the high-voltage side battery element;
the converting direction switching circuit which selects either the output of the first high-voltage side error amplifier circuit or the output of the first low-voltage side error amplifier circuit in accordance with the switching signal;
a control voltage selector circuit which selects the output of the second high-voltage side error amplifier circuit when the output of the second high-voltage side error amplifier circuit is highest, and the output of the second low-voltage side error amplifier circuit when the output of the second low-voltage side error amplifier circuit is lowest, and in other cases, it selects the output of the converting direction switching circuit;
the PWM comparison circuit which compares the output of the control voltage selector circuit with the reference triangular wave voltage and outputs the control signal for ON-OFF drive of the first switching element and the second switching element; and
the control circuit which executes inverting operation of the first switching element and the second switching element in accordance with the control signal.

9. The bi-directional DC-DC converter of claim 8,
wherein the first high-voltage side error amplifier circuit amplifies and outputs the difference of the first high-voltage side control voltage as against the first high-voltage side set-voltage;
the second high-voltage side error amplifier circuit amplifies and outputs the difference of the second high-voltage side control voltage as against the second high-voltage side set-voltage;
the first low-voltage side error amplifier circuit amplifies the difference of the first low-voltage side control voltage as against the first low-voltage side set-voltage, and outputs it after inverting the polarity with respect the output of the first high-voltage side error amplifier circuit;
the second low-voltage side error amplifier circuit amplifies the difference of the second low-voltage side control voltage as against the second low-voltage side set-voltage, and outputs it after inverting the polarity with respect the output of the second high-voltage side error amplifier circuit; and
the control voltage selector circuit selects the output of the second high-voltage side error amplifier circuit when the output of the second high-voltage side error amplifier circuit is lowest, and the output of the second low-voltage side error amplifier circuit when the output of the second low-voltage side error amplifier circuit is highest, and in other cases, it selects the output of the converting direction switching circuit.
